# FASCICULE DE BREVET EUROPEEN

(11) **EP 2 231 532 B1**
(45) Date de publication et mention de la délivrance du brevet: **18.01.2012**
(21) Numéro de dépôt: 08867600.2
(22) Date de dépôt: 27.11.2008
(51) Int. Cl.: C02F 9/02, C02F 1/72, C02F 1/52

(54) **PROCÉDÉ DE TRAITEMENT D'EAU PAR OXYDATION AVANCÉE ET FLOCULATION LESTÉE, ET INSTALLATION DE TRAITEMENT CORRESPONDANTE**
VERFAHREN ZUR WASSERAUFBEREITUNG MITTELS FORTGESCHRITTENER OXIDATION UND BALLASTFLOCKUNG SOWIE ENTSPRECHENDE AUFBEREITUNGSANLAGE
METHOD FOR TREATING WATER BY ADVANCED OXIDATION AND BALLASTED FLOCCULATION, AND CORRESPONDING TREATMENT PLANT

(30) Priorité: 20.12.2007 FR 0760141
(43) Date de publication de la demande: 29.09.2010
(73) Titulaire: Veolia Water Solutions & Technologies Support, 94410 Saint-Maurice (FR)
(72) Inventeur: COSTE, Marielle, F-75010 Paris (FR); BUCAILLE, Arnaud, Causeway Bay Hong Kong (JP); LOGETTE, Sébastien, F-95150 Taverny (FR)
(74) Mandataire: Larcher, Dominique
(86) Numéro de dépôt international: PCT/EP2008/066286
(87) Numéro de publication internationale: WO 2009/083346

(56) Documents cités:
- DE-A1-102004 029 072
- FR-A- 2 464 230
- FR-A- 2 868 064
- US-A1- 2003 173 306

## Description

### 1. Domaine de l'invention

Le domaine de l'invention est celui du traitement des eaux.

Plus précisément, l'invention concerne le traitement des eaux usées qui comportent simultanément une pollution organique particulaire et/ou colloïdale et une pollution dissoute.

Notamment, la présente invention concerne le traitement des effluents aqueux industriels et le traitement des eaux municipales.

Ces eaux usées comportent fréquemment une pollution particulaire, une pollution colloïdale et une pollution dissoute. La pollution dissoute regroupe la pollution dissoute facilement biodégradable exprimée par la teneur en DBO (Demande Biologique en Oxygène) soluble dans l'eau, traitée par traitement biologique, et la pollution dissoute non ou difficilement biodégradable, exprimée par la teneur en DCO dure ou réfractaire (Demande Chimique en Oxygène), traitée au moyen de produits chimiques.

### 2. Art antérieur

La pollution particulaire et/ou colloïdale en suspension dans les eaux est traitée, habituellement et relativement facilement, par voie physico-chimique, essentiellement par décantation directe ou par décantation précédée d'une coagulation et/ou d'une floculation.

La pollution soluble et facilement biodégradable, est habituellement traitée par voie biologique, c'est-à-dire par la mise en contact de l'eau à traiter avec une ou plusieurs biomasses contenant des bactéries susceptibles de la dégrader.

### 3. Inconvénients de l'art antérieur

Le traitement de la pollution organique des eaux usées, notamment d'origine industrielle (industrie chimique, pharmaceutique, textile) ou d'origine municipale qui peuvent comporter une forte composante en pollution d'origine industrielle, impliquent des temps de traitement relativement longs. La longueur de ces temps de traitement est liée en particulier à la nature de certaines molécules difficilement biodégradables et à la lenteur inhérente aux processus biologiques habituellement mis en oeuvre.

En outre, les eaux industrielles traitées par voie biologique contiennent généralement une proportion plus ou moins élevée de DCO résiduelle devant être traitée ultérieurement par voie chimique.

Certaines techniques d'oxydation avancée ont été mises en oeuvre dans le but de réduire la pollution soluble difficilement ou non biodégradable d'un effluent.

Au rang de ces techniques d'oxydation avancée figurent celles mettant en oeuvre le réactif de Fenton, qui permet de générer des radicaux libres OH^{•} à partir de peroxyde d'hydrogène en présence d'un métal de transition comme le fer, par les réactions suivantes :

Fe²⁺ + H₂O₂ → Fe³⁺ + OH^{•} + OH⁻

Fe³⁺+ H2O2 → Fe²⁺ + OOH^{•} + H⁺

Les radicaux hydroxyles OH^{•} ainsi générés réagissent avec une large gamme de polluants organiques pour les oxyder.

Afin d'abattre de façon simultanée la pollution particulaire, colloïdale et soluble des effluents, ces techniques d'oxydation avancée ont jusqu'ici été utilisées en combinaison avec des techniques de coagulation, floculation et décantation.

La demande internationale de brevet portant le numéro WO 99/21801 décrit ainsi un procédé de traitement d'eau mettant en oeuvre une combinaison d'oxydation avancée et de coagulation, floculation, décantation.

Ce procédé permet de traiter simultanément la pollution particulaire et la pollution organique dissoute. Cependant, le recours à un tel procédé implique des temps de traitement de l'eau relativement élevés d'un minimum de 1 heure et 40 minutes et pouvant atteindre plus de 5 heures. Le brevet Français FR2464230 divulgue un procédé similaire pour le traitement des effluents contenant des matières colorants.

La demande de brevet américain portant le numéro US-A1-2002/153329 décrit également un tel procédé qui nécessite de plus l'emploi d'un catalyseur hétérogène.

Un tel procédé implique également des temps de traitement d'un minimum de 4 heures et pouvant atteindre 24 heures et présente également l'inconvénient de nécessiter l'emploi d'un catalyseur hétérogène engendrant un poste de coût important.

De tels procédés de traitement présentent encore l'inconvénient de nécessiter des ouvrages de taille importante et d'être relativement onéreux. L'usage de ceux-ci est ainsi peu répandu.

### 4. Objectifs de l'invention

L'invention a notamment pour objectif de pallier ces inconvénients de l'art antérieur.

Plus précisément, un objectif de l'invention est de fournir une technique de traitement d'eaux usées qui permettent, dans au moins un mode de réalisation, de traiter simultanément la pollution particulaire, la pollution colloïdale et la pollution dissoute.

L'invention a également pour objectif, dans au moins un mode de réalisation, de réduire la concentration en DCO résiduelle d'une eau recueillie par exemple après traitement biologique.

Un autre objectif de l'invention est de mettre en oeuvre une telle technique qui permette, dans au moins un mode de réalisation, de réduire de façon non négligeable la durée d'un traitement d'eaux usées.

L'invention poursuit également l'objectif, dans au moins un mode de réalisation, de fournir une telle technique qui conduise à accélérer le traitement d'eaux usées.

L'invention a encore pour objectif, dans au moins un mode de réalisation, de fournir une telle technique qui soit fiable, et dont la mise en oeuvre soit simple et peu coûteuse.

### 5. Exposé de l'invention

Ces objectifs, ainsi que d'autres qui apparaîtront par la suite, sont atteints à l'aide d'un procédé de traitement d'une eau chargée d'impuretés colloïdales, dissoutes ou en suspension, dans une installation de traitement.

Selon l'invention, ledit procédé comprend :
- une étape de mise en contact, dans une zone d'oxydation avancée, de ladite eau avec du peroxyde d'hydrogène en présence d'au moins un sel de métal de transition ;
- une étape de floculation consistant à mettre en contact, dans une zone de floculation, ladite eau avec au moins un adjuvant de floculation, et avec au moins un ballast constitué d'au moins un matériau granulaire insoluble plus dense que l'eau;
- une étape d'introduction du mélange d'eau et de flocs ainsi formé dans une zone de décantation ;
- une étape de séparation de l'eau traitée en partie haute de ladite zone de décantation d'un mélange de boue et de ballast résultant de la décantation desdits flocs ;
- une étape d'extraction du mélange de boue et de ballast en partie basse de ladite zone de décantation ;
- une étape de recyclage d'au moins une partie des boues dans ladite zone d'oxydation avancée (10).

Ainsi, l'invention repose sur une approche innovante du traitement des eaux usées qui consiste à combiner un traitement par oxydation avancée avec un traitement adsorbant et un traitement de coagulation, floculation, décantation lestée.

Une telle approche permet de traiter les pollutions particulaires, les pollutions colloïdales et une forte proportion des pollutions dissoutes non ou difficilement biodégradables, simultanément et dans des temps très courts, ou à tout le moins dans des temps inférieurs aux temps de traitement des eaux demandés par la mise en oeuvre des techniques selon l'art antérieur.

En outre, le fait de recycler au moins une partie des boues issues de la décantation dans la zone d'oxydation avancée permet de recycler les métaux qui se sont déposés sur le ballast et/ou qui ont précipités en fines particules d'oxydes métalliques de forte densité au cours du procédé. Ces métaux et/ou métaux oxydés constituent des « métaux actifs » dont la présence contribue à améliorer la cinétique de la réaction d'oxydation avancée et à réduire le temps nécessaire au traitement de l'effluent.

En effet, les métaux dissouts contribuent à accélérer le traitement selon la réaction de fenton. Les métaux sous forme d'oxydes et/ou d'oxyhydroxydes accélèrent la réaction d'oxydation et les oxyhydroxydes apportent un effet adsorbant.

En outre, le recyclage des boues et du ballast est favorable à l'augmentation d'espèces minérales adsorbantes de type oxy-hydroxyde de fer (FeOOH), crées in situ, qui concourent à l'élimination des matières organiques par adsorption, ainsi qu'à l'élimination des métaux solubles présents dans l'effluent. Ceci contribue également à améliorer l'abattement de la pollution dissoute.

Avantageusement, il peut être prévu la mise en oeuvre d'une étape d'injection dans l'eau à traiter d'un agent adsorbant.

Le procédé selon l'invention constitue ainsi un procédé permettant d'accélérer le traitement de l'eau.

Selon une caractéristique avantageuse de l'invention, la durée séparant la mise en contact de ladite eau avec le peroxyde d'hydrogène et la séparation de l'eau traitée est inférieure à 1 heure.

La mise en oeuvre de l'invention permet ainsi d'abattre une forte proportion de la DCO résiduelle en un temps court, à tout le moins par comparaison aux techniques de l'art antérieur.

Préférentiellement, le procédé de traitement selon l'invention comprend une étape de séparation boue/ballast par hydrocyclonage.

Il peut également être prévu que la séparation boue/ballast soit obtenue par un autre moyen physique ou gravitaire comme un aimant, un filtre ou un décanteur.

Dans ce cas, il comprend avantageusement une étape de recyclage de la sousverse de ladite étape de séparation par hydrocyclonage dans ladite zone de floculation.

Il peut également comprendre, selon une caractéristique préférentielle, une étape de recyclage de la sousverse de ladite étape de séparation par hydrocyclonage dans ladite zone d'oxydation avancée.

La sousverse de l'hydrocyclone est constituée d'un mélange composé d'une forte proportion de ballast et de métaux qui ont précipités en fines particules d'oxydes métalliques de forte densité au cours du procédé, (et de résidus de boue).

Le recyclage du ballast permet ainsi de recycler ces particules d'oxydes métalliques. La cinétique de la réaction d'oxydation avancée est alors améliorée grâce à celles-ci et le temps nécessaire au traitement de l'effluent est réduit.

Préférentiellement, le procédé de traitement selon l'invention comprend une étape de recyclage d'une partie des boues provenant de la surverse de ladite étape de séparation par hydrocyclonage dans ladite zone d'oxydation avancée.

Le recyclage de la boue qui contient des métaux actifs conduit à accélérer l'oxydation avancée et par conséquent le traitement.

En outre, le recyclage des boues et du ballast contribue à améliorer l'abattement de la pollution dissoute. En effet, il favorise, comme cela à déjà été expliqué, l'augmentation d'espèces minérales adsorbantes de type oxy-hydroxyde de fer (FeOOH), crées in situ, qui sont favorables à l'élimination des matières organiques par adsorption, ainsi qu'à l'élimination des métaux solubles présents dans l'effluent.

Selon une autre caractéristique avantageuse de l'invention, le procédé de traitement selon l'invention comprend une étape de mise en contact de ladite eau avec au moins un sel coagulant dans une zone de coagulation.

Dans ce cas, ledit sel coagulant est préférentiellement du chlorure ferrique.

L'utilisation de chlorure ferrique conduit en partie à doter le mélange de boues et de ballast de métaux actifs qui, lors du recyclage de la boue et/ou du ballast, participent à accélérer le traitement.

Avantageusement, ledit sel de métal de transition est choisi dans le groupe constitué par les métaux suivants : le fer et le cuivre.

Le recours à ce type de métal de transition permet d'obtenir une bonne oxydation.

Selon une caractéristique préférée, ladite étape de floculation comprend une étape de maturation dans une zone de maturation placée en amont de ladite zone de décantation.

La maturation permet de s'assurer que les réactions d'oxydation, la coagulation, et la floculation sont achevées avant d'entamer la décantation, ce qui permet d'en améliorer le résultat.

Préférentiellement, la mise en contact de ladite eau avec ledit adjuvant floculant se fait au moins une minute après mise en contact de ladite eau avec chacun desdits sels.

Cela permet de déclencher la floculation après oxydation et coagulation de la pollution dissoute et ainsi de favoriser la formation des flocs:

Avantageusement, le temps de séjour de ladite eau mise en contact avec le peroxyde d'hydrogène dans ladite zone d'oxydation avancée est compris entre 2,5 et 45 minutes, et préférentiellement entre 7 et 20 minutes.

De telles durées permettent d'obtenir une oxydation convenable de la pollution dissoute.

Selon une caractéristique préférée, le temps de séjour de ladite eau mise en contact avec ledit adjuvant floculant et ledit ballast dans ladite zone de floculation et/ou de maturation est supérieur à 3 minutes, et préférentiellement comprise entre 5 et 15 minutes.

De telles durées permettent d'obtenir une floculation efficace et la formation de flocs solides. Ceci contribue à faciliter la décantation ultérieure des flocs et à augmenter la vitesse de décantation au miroir.

Avantageusement, le rapport du débit de ladite eau par la surface horizontale de ladite zone de décantation est supérieur à 15 m/h, et est préférentiellement compris entre 30 et 120 m/h.

De telles vitesses de décantation permettent de réduire la durée globale de traitement des eaux.

L'invention concerne également une installation de traitement d'eau pour la mise en oeuvre du procédé de traitement d'eau selon l'invention. Une telle installation comprend :
- une zone d'oxydation avancée pourvue de moyens d'injection de peroxyde d'hydrogène, de moyens d'injection dudit sel de métal de transition, et d'au moins un agitateur ;
- une canalisation d'amenée de ladite eau dans ladite zone d'oxydation avancée ;
- une zone de flocultation pourvue de moyens d'injection dudit adjuvant floculent et d'au moins un agitateur ;
- des moyens d'injection dudit ballast reliés à ladite zone de floculation ou à ladite zone d'oxydation avancée ;
- une zone de décantation pourvu d'une évacuation de ladite eau traitée en partie haute, et d'une évacuation dudit mélange de boue et de ballast en partie basse ;
- des moyens de recyclage d'au moins une partie des boues dans ladite zone d'oxydation avancée.

Préférentiellement, une installation selon l'invention comprend une zone de coagulation en amont de ladite zone de floculation et pourvue d'au moins un agitateur et de moyens d'injection dudit sel coagulant.

Il est ainsi possible de procéder à une étape de coagulation de façon à faciliter la formation des flocs.

Selon une caractéristique avantageuse, une installation selon l'invention comprend une zone de maturation placée en amont de ladite zone de décantation et munie d'au moins un agitateur.

La mise en oeuvre d'une telle zone de maturation permet d'assurer une floculation convenable de façon à améliorer la décantation ultérieure des flocs.

Avantageusement, ladite zone de floculation et ladite zone de maturation sont confondues.

Ceci permet de simplifier l'installation sans pour autant dégrader la qualité des résultats obtenus par la mise en oeuvre du procédé selon l'invention.

Selon une caractéristique préférée, au moins un desdits agitateurs est entouré par un guide flux essentiellement cylindrique et vertical.

Ceci permet d'obtenir un bon mélange tout en limitant les taux de cisaillement et contribue en conséquence à éviter de casser les flocs formés.

### 6. Liste des figures

D'autres caractéristiques et avantages de l'invention apparaîtront plus clairement à la lecture de la description suivante de modes de réalisation préférentiels, donnés à titre de simples exemples illustratifs et non limitatifs, et des dessins annexés, parmi lesquels :
- la figure 1 présente est une représentation schématique d'un premier mode de réalisation d'une installation de traitement d'eau selon l'invention ;
- la figure 2 illustre une représentation schématique d'un deuxième mode de réalisation d'une installation de traitement d'eau selon l'invention, dans laquelle les zones de floculation et de maturation sont réunies dans une même zone ;
- la figure 3 illustre une représentation schématique d'un troisième mode de réalisation d'une installation de traitement d'eau selon l'invention, dans laquelle la sousverse et une partie des surverses sont recyclées dans la zone d'oxydation avancée ;
- la figure 4 illustre une représentation schématique d'une variante susceptible d'être mise en oeuvre dans les modes de réalisation décrits et selon laquelle les agitateurs sont logés à l'intérieur de guides-flux.

### 7. Description d'un mode de réalisation de l'invention

### 7.1 Rappel du principe de l'invention

Le principe général de l'invention repose sur la mise en oeuvre combinée d'une oxydation avancée associée à une floculation/décantation lestée et d'un recyclage dans la zone d'oxydation avancée d'au moins une partie des boues formées de façon à traiter simultanément et dans des temps relativement courts les pollutions particulaires, colloïdales et les pollutions solubles facilement biodégradable ou non.

Une telle approche permet de traiter rapidement des eaux usées et d'en réduire fortement la DCO résiduelle.

### 7.2 Exemple d'un premier mode de réalisation d'une installation selon l'invention

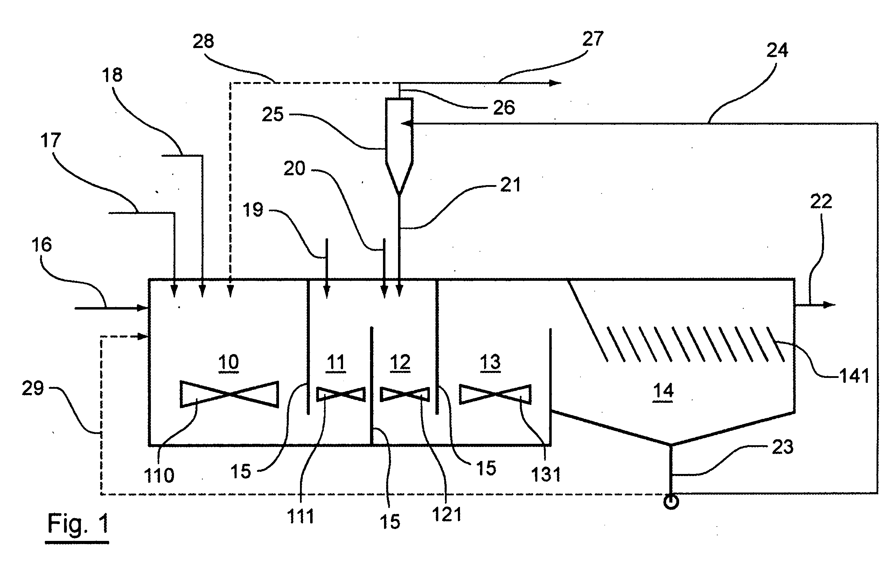

On présente, en relation avec la figure 1, un mode de réalisation d'une installation de traitement d'eau selon l'invention.

Tel que cela est représenté sur cette figure 1, une telle installation comprend une zone d'oxydation avancée 10, une zone de coagulation 11, une zone de floculation 12, une zone de maturation 13 disposées à la suite les unes des autres et accueillant chacune un agitateur 110, 111, 121, 131.

Une zone de décantation 14 est disposée en aval de la zone de maturation 13. Elle accueille, en partie haute, une pluralité de lamelles 141 inclinées. Dans d'autres modes de réalisation, les lamelles 141 pourront s'étendre essentiellement à la verticale ou bien ne pas être présentes.

Ces zones 10, 11, 12, 13 et 14 sont séparées les unes des autres au moyen de parois 15 conçues de façon à ce que ces zones communiquent entre-elles.

Une canalisation 16 d'amenée d'un effluent à traiter débouche dans la zone d'oxydation avancée 10. En outre, la zone d'oxydation avancée 10 est pourvue de moyens d'injection 17, par exemple un injecteur, de peroxyde d'hydrogène, et de moyens d'injection 18 d'un sel de métal de transition.

Comme cela apparaît sur la figure 1, la zone de coagulation 11 est pourvue de moyens d'injection 19 d'un sel coagulant.

La zone de floculation 12 est pourvue de moyens d'injection 20 d'un adjuvant de floculation, et de moyens d'injection d'un ballast 21.

La zone de décantation 14 est pourvue, en partie haute, d'une évacuation 22 d'un effluent traité, et en partie basse d'une évacuation 23 d'un mélange de boue et de ballast.

L'évacuation basse 23 de la zone de décantation 14 est reliée, par une canalisation de recyclage 24 à un hydrocyclone 25 (ou tout autre moyen comme par exemple un décanteur, un filtre à aimant...) dont la sousverse 21 est reliée à la zone de floculation 12 et la surverse 26 est reliée à une canalisation d'extraction de boues en excès 27.

Tel que cela apparaît sur cette figure 1, une partie de la surverse 26 est reliée à une canalisation 28 de recyclage d'une partie des boues dans la zone d'oxydation avancée 10.

Tel que cela apparaît également sur cette figure 1, il peut être prévu, dans une variante de ce mode de réalisation, que l'évacuation basse 23 de la zone de décantation soit reliée par une canalisation 29 à la zone d'oxydation avancée 10.

### 7.3 Exemple d'un deuxième mode de réalisation d'une installation selon l'invention

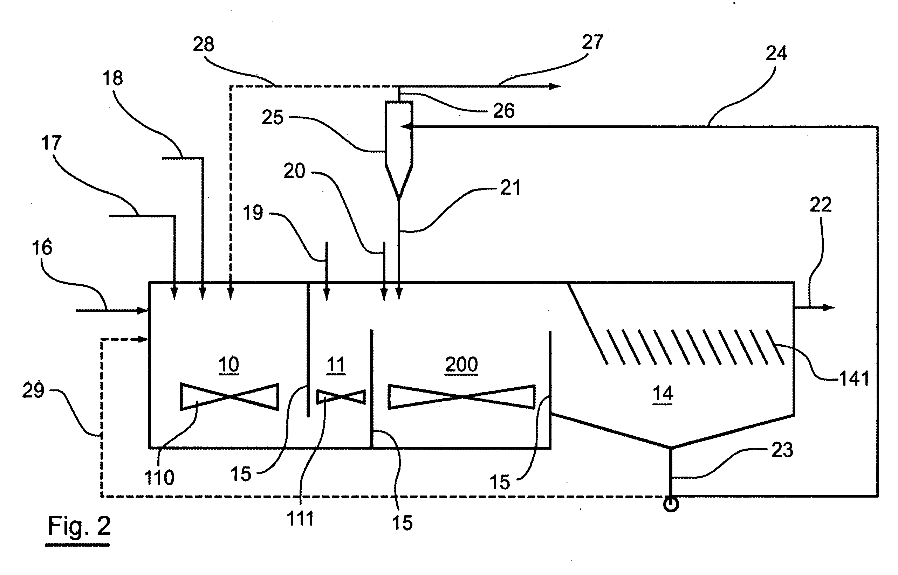

La figure 2 illustre un deuxième mode de réalisation d'une installation de traitement d'eau selon l'invention.

Une telle installation met en oeuvre de nombreux éléments équivalents à ceux qui sont mis en oeuvre dans l'installation selon le premier mode de réalisation décrit plus haut, et qui portent les mêmes références numériques.

Dans ce deuxième mode de réalisation, il est prévu que la zone de floculation 12 et la zone de maturation 13 sont réunies dans une même cuve 200 qui est pourvue des moyens d'injection d'un adjuvant de floculation 20 et des moyens d'injection de ballast 21.

### 7.4 Exemple d'un troisième mode de réalisation d'une installation selon l'invention

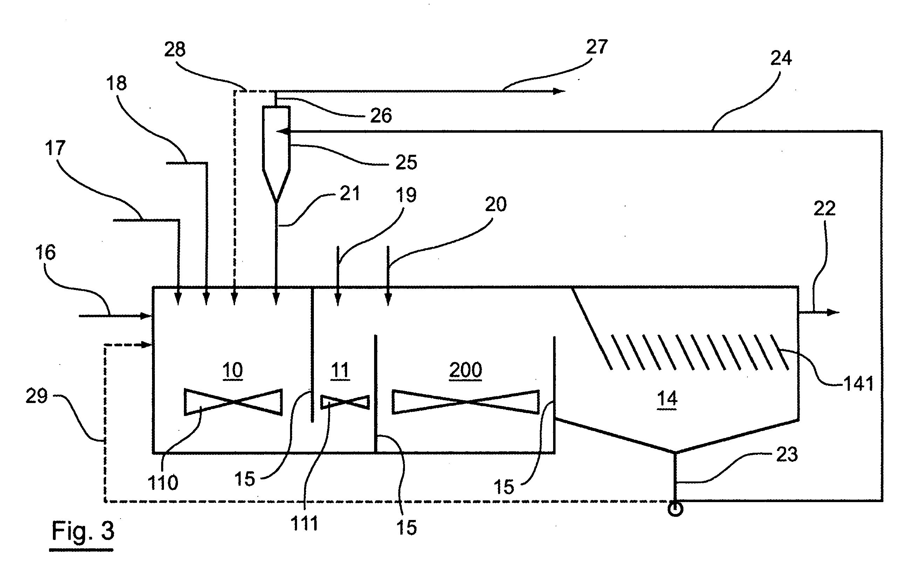

On présente en relation avec la figure 3 un troisième mode de réalisation d'une installation de traitement selon l'invention.

Tel que cela est représenté, une telle installation met en oeuvre des moyens équivalents à ceux mis en oeuvre dans le deuxième mode de réalisation décrit plus haut. Toutefois, cette installation selon le troisième mode de réalisation se distingue de l'installation selon le deuxième mode de réalisation par le fait que les moyens d'injection du ballast 21 sont reliés à la zone d'oxydation avancée 10.

### 7.5 Variantes

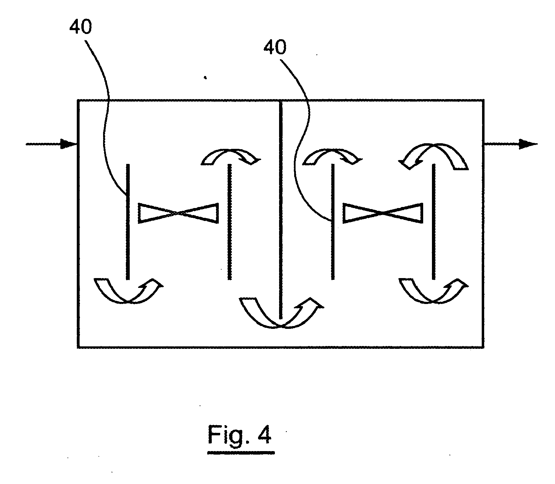

La figure 4 illustre une variante susceptible d'être mise en oeuvre indifféremment dans chacun des modes de réalisation décrits plus haut.

Cette variante consiste à prévoir que les agitateurs, ou à tout le moins qu'au moins .certains d'entre eux, soient logés à l'intérieur de guide flux 40 se présentant sous la forme de tubes de section circulaire.

Une autre variante peut consister à prévoir la mise en oeuvre de moyens de mesure (non représentés) d'une information représentative d'une valeur de pH dans la zone d'oxydation avancée 10 et/ou en amont ou en aval de la zone de décantation 14, et des moyens d'injection d'au moins à réactif d'ajustement du pH dans la zone d'oxydation avancée 10 et/ou en amont ou en aval de la zone de décantation 14.

Une variante peut également consister à mettre en oeuvre, dans le fond de la zone de décantation 14, un système de raclage du mélange de boues et de ballast.

### 7.6 Procédé de traitement d'une eau selon l'invention

Un exemple de procédé de traitement d'une eau selon l'invention va maintenant être décrit.

Un tel procédé de traitement peut par exemple être mis en oeuvre dans l'une des installations de traitement d'eau selon l'invention telles que décrites ci-dessus.

Le procédé consiste à introduire un effluent à traiter dans la zone d'oxydation avancée 10 au moyen de la canalisation d'amenée 16. L'effluent introduit dans la zone d'oxydation avancée 10 est mis en contact, sous agitation, avec du peroxyde d'hydrogène en présence d'un sel de métal de transition par activation des moyens d'injection 17 et 18.

Le sel de métal de transition est préférentiellement un sel de fer, et avantageusement un sel ferreux comme du sulfate ferreux. Dans un autre mode de réalisation, il peut être prévu que le métal de transition mis en oeuvre est le cuivre.

On note que le temps de mise en contact de l'effluent avec le peroxyde d'hydrogène est avantageusement compris entre 2,5 et 45 minutes, et préférentiellement compris entre 7 et 20 minutes.

L'effluent est ensuite dirigé vers la zone de coagulation 11 dans laquelle il est mis en contact avec un sel coagulant, préférentiellement un sel ferrique comme le chlorure ferrique, par activation des moyens d'injection 19.

Dans une variante, le sel ferreux et le sel ferrique pourront être introduit dans la zone d'oxydation avancée 10. Pour ce faire, les moyens d'injection 19 seront prévus dans la zone d'oxydation avancée 10.

L'effluent est ensuite mis en contact, sous agitation, avec un adjuvant de floculation dans la zone de floculation 12. Préférentiellement, l'adjuvant de floculation est un polymère floculant comme par exemple du polyacrylamide. La mise en contact de l'effluent avec l'adjuvant de floculation se fait avantageusement au moins une minute après l'introduction de chacun des sels.

L'effluent est également mis en contact, dans cette zone de floculation 12, avec au moins un matériau granulaire (ou ballast) plus dense que l'effluent, par l'activation des moyens d'injection 21. Préférentiellement, le matériau granulaire est constitué par du sable fin dont le diamètre efficace peut avantageusement être compris entre 50 et 200 micromètres. Toutefois le matériau granulaire peut être aussi de la magnétite, d'autres oxydes minéraux à base de fer, de cuivre, des poly oxydes minéraux synthétiques ou naturels, des oxydes de magnésium (par exemple hydrotalcite), d'aluminium (par exemple, alumine activée). La granulométrie utilisée est similaire à celle du sable avec une surface développée plus grande permettant une meilleure adsorption.

Le matériau granulaire peut être introduit au niveau de l'adjuvant de floculation. Dans des variantes, il peut être injecté en amont de l'injection de l'adjuvant de floculation, avantageusement au niveau de la zone d'oxydation 10. Dans d'autres variantes, il pourra être introduit indifféremment en tout point.

L'effluent est maintenu en contact du matériau granulaire et de l'adjuvant de floculation pendant au moins 3 minutes, et préférentiellement pendant une durée comprise entre 5 et 15 minutes. Lorsque la zone de maturation 13 est mise en oeuvre, l'effluent peut être avantageusement maintenu en contact avec le matériau granulaire et l'adjuvant de floculation dans celle-ci.

Le mélange d'effluent et de flocs formés dans la zone de floculation 12 est dirigé vers la zone de décantation 14 avantageusement à une vitesse au miroir supérieure à 15 m/h, et préférentiellement comprise entre 30 et 120 m/h.

On note que la « vitesse au miroir » est définie comme étant égale au rapport du débit d'eau à traiter exprimé en m³/h et de la surface horizontale de la zone de décantation exprimée en m².

L'eau traitée est ensuite séparée d'un mélange de boue et de matériau granulaire résultant de la décantation des flocs, puis évacuée au moyen de l'évacuation 22.

Le mélange de boue et de ballast est quant à lui extrait en partie basse de la zone de décantation 14 au moyen de l'évacuation 23.

Le mélange de boue et de ballast est ensuite acheminé en direction d'un hydrocyclone 25 au moyen d'une canalisation 24 dans le but de les séparer l'un de l'autre, à tout le moins en partie.

La sousverse 21 de l'hydrocyclone, constituée d'un mélange composé d'une forte proportion de ballast, de métaux qui ont précipités en fines particules d'oxydes métalliques de forte densité au cours du procédé, (et de résidus de boue), est recyclée dans la zone de floculation 12. Dans un autre mode de réalisation, la sousverse 21 peut être recyclée directement dans la zone d'oxydation avancée 10.

Le recyclage du ballast permet de recycler les métaux qui se sont déposés sur le ballast et/ou qui ont précipités en fines particules d'oxydes métalliques tel qu'indiqué ci-dessus. Plus précisément, une partie des métaux se dépose sur le ballast et l'autre partie précipite. Les formes les plus lourdes de la partie qui précipite suivent le ballast alors que les formes moins denses suivent les boues. Ceci contribue à améliorer la catalyse de la réaction d'oxydation avancée et à réduire le temps nécessaire au traitement de l'effluent.

La surverse 26, constituée d'un mélange comprenant une forte proportion de boue (et possiblement d'un résidu de ballast), est évacuée au moyen d'une canalisation 27 d'évacuation des boues en excès.

Une partie des surverses 26 de l'hydrocyclone 25 est recyclée au moyen de la canalisation 28 dans la zone d'oxydation avancée 10. Il peut également être prévu qu'elle soit recyclée dans la zone de coagulation 11. Ceci permet, du fait que la boue recyclée contient des métaux actifs, d'accélérer l'oxydation avancée. À cet égard, il convient de noter que la séparation de la boue et du ballast au moyen de l'hydrocyclone tend à augmenter la concentration en précipités métalliques contenus dans la surverse 26.

En outre, le recyclage des boues et du ballast est favorable à l'augmentation d'espèces minérales adsorbantes de type oxy-hydroxyde de fer (FeOOH), crées in situ, qui sont favorables à l'élimination des matières organiques par adsorption, ainsi qu'à l'élimination des métaux solubles présents dans l'effluent. Ceci contribue également à améliorer l'abattement de la pollution dissoute.

Dans une autre variante, une partie du mélange de boue et de ballast extrait en partie basse de la zone de décantation est directement recyclée dans la zone d'oxydation forcée. Ceci peut permettre de profiter du complément de catalyse que peuvent constituer les composés métalliques précipités dans la boue. Ceci peut notamment apparaître utile dans le cas où l'effluent est fortement chargé en pollution soluble, par exemple au-dessus de 300mg/l de DCO soluble, et faiblement chargé en MES. On note que le pourcentage de boues recyclées pourra être augmenté par une augmentation du diamètre de la sousverse de l'hydrocyclone, ce qui permet de sélectionner les boues les plus lourdes, les plus chargées en métaux actifs.

Dans une variante du procédé selon l'invention, celui-ci peut comprendre une étape consistant à mesurer la valeur du pH dans la zone d'oxydation avancée 10 et/ou en amont ou en aval de la zone de décantation 14, et une étape d'injection d'au moins un réactif d'ajustement du pH dans la zone d'oxydation 10 et/ou en amont ou en aval de la zone de décantation 14 de façon à y maintenir la valeur du pH respectivement entre 3 et 6 et 6 et 8.

La mise en oeuvre d'un procédé selon l'invention permet de réduire la durée du traitement de l'eau et notamment de limiter la durée qui s'écoule entre la mise en contact de l'eau avec le peroxyde d'hydrogène et l'extraction de l'eau traitée à tout au plus une heure, tout en permettant d'abattre la DCO résiduelle contenue dans l'eau traitée recueillie après traitement.

Une telle réduction de la durée de traitement de l'eau peut s'expliquer par la mise en oeuvre d'une décantation à flocs lestés qui permet de réduire la durée de décantation, mais également de conduire à un excellent abattement des fines particules formées au cours de la réaction d'oxydation avancée, qui apparaissent être rapidement piégées dans les flocs lestés décantant rapidement.

Toutefois, le recyclage du ballast et des boues joue un rôle important dans la réduction de la durée du traitement de l'eau selon l'invention, en ce qu'il permet de réduire le temps de contact nécessaire avant la décantation :
- la solidité des flocs permet des gradients de vitesse importants en floculation, entraînant une amélioration des échanges réactionnels et une diminution du temps de contact nécessaire à la réaction ;
- le recyclage du ballast permet de recycler les métaux qui se sont déposés sur les grains de sable ou ont été précipités en fines particules métalliques de forte densité, ce qui améliore la catalyse de la réaction d'oxydation avancée ;
- le recyclage d'une partie des boues, qui contiennent des métaux actifs, peut permettre d'accélérer la réaction d'oxydation avancée, en augmentant la concentration des métaux sous leur forme active ;
- le recyclage des boues et du ballast est favorable à l'augmentation de la concentration en espèces minérales adsorbantes favorable à l'élimination des matières organiques par adsorption, ainsi qu'à l'élimination de métaux solubles présents dans l'effluent.

### 7.7 Essais

Les essais suivants ont été réalisés sur une unité pilote industrielle de 50 m³/h, telle que celle illustrée à la figure 1, traitant des effluents de la chimie fine, de l'industrie des colorants et de l'industrie des textiles artificiels avec les caractéristiques suivantes :
- introduction de sulfate ferreux à des taux compris entre 50 et 200 mg/l ;
- introduction du peroxyde d'hydrogène à des taux compris entre 6 et 11 mg/l en ligne, en amont de la zone de coagulation ;
- temps de mise en contact de 2,5 minutes à un pH non régulé (usuellement entre 7 et 7,5) avant entrée en zone de coagulation ;
- coagulation agitée pendant 5 minutes avec injection de chlorure ferrique à des taux compris entre 300 et 600 mg/l ;
- floculation agitée avec réception du lest sableux (diamètre efficace de 125 micromètres), avec 1,9 mg/l de polymère pendant un temps de séjour de 5 minutes ;
- floculation-maturation pendant 10 minutes ;
- extraction du mélange de sable et de boue à un taux de 11m³/h dont 2,5 m³/h de sable recyclé en zone de floculation.

Les essais ont été réalisés avec des effluents sortant d'un traitement biologique et comportant encore 225 à 324 mg/l de DCO totale, 194 à 240 mg/l de DCO filtrée (sur papier 0,45 micromètres), pratiquement de type réfractaire puisque sortant d'un traitement biologique, et 19 à 46 mg/l de MES.

Les essais ont montré une augmentation notable des rendements d'abattement :
- de la DCO filtrée (représentative de la DCO soluble), qui passait d'une valeur de 21% sans usage de peroxyde d'hydrogène à une valeur de 37% avec le peroxyde d'hydrogène ;
- de la DCO totale, qui passait d'une moyenne de 29% à une moyenne de 43% ;
- de l'indice de couleur apparent (ICA) qui passait d'une moyenne de 27% à une moyenne de 47% ;
- les temps de séjour globaux dans l'installation au cours de ces essais étaient de l'ordre de 25 minutes.

## Revendications

1. Procédé de traitement d'une eau chargée d'impuretés colloïdales, dissoutes ou en suspension, dans une installation de traitement, ledit procédé comprenant :
- une étape de mise en contact, dans une zone d'oxydation avancée (10), de ladite eau avec du peroxyde d'hydrogène en présence d'au moins un sel de métal de transition ;
- une étape de floculation consistant à mettre en contact, dans une zone de floculation (12), ladite eau avec au moins un adjuvant de floculation, et avec au moins un ballast constitué d'au moins un matériau granulaire insoluble plus dense que l'eau;
- une étape d'introduction du mélange d'eau et de flocs ainsi formé dans une zone de décantation (14) ;
- une étape de séparation de l'eau traitée en partie haute de ladite zone de décantation (14) d'un mélange de boue et de ballast résultant de la décantation desdits flocs ;
- une étape d'extraction du mélange de boue et de ballast en partie basse (23) de ladite zone de décantation (14) ;
- une étape de recyclage d'au moins une partie des boues dans ladite zone d'oxydation avancée (10).

2. Procédé de traitement selon la revendication 1, **caractérisé en ce que** la durée séparant la mise en contact de ladite eau avec le peroxyde d'hydrogène et la séparation de l'eau traitée est inférieure à 1 heure.

3. Procédé de traitement selon l'une quelconque des revendications 1 à 2, **caractérisé en ce qu'**il comprend une étape de séparation boue/ballast par hydrocyclonage.

4. Procédé de traitement selon la revendication 3, **caractérisé en ce qu'**il comprend une étape de recyclage de la sousverse (21) de ladite étape de séparation par hydrocyclonage dans ladite zone de floculation (12).

5. Procédé de traitement selon la revendication 3, **caractérisé en ce qu'**il comprend une étape de recyclage de la sousverse (21) de ladite étape de séparation par hydrocyclonage dans ladite zone d'oxydation avancée (10).

6. Procédé de traitement selon l'une quelconque des revendications 3 à 5, **caractérisé en ce qu'**il comprend une étape de recyclage d'une partie des boues provenant de la surverse (26) de ladite étape de séparation par hydrocyclonage dans ladite zone d'oxydation avancée (10).

7. Procédé de traitement selon l'une quelconque des revendication 1 à 6, **caractérisé en ce qu'**il comprend une étape de mise en contact de ladite eau avec au moins un sel coagulant dans une zone de coagulation (11).

8. Procédé de traitement selon la revendication 7, **caractérisé en ce que** ledit sel coagulant est du chlorure ferrique.

9. Procédé de traitement selon l'une quelconque des revendications 1 à 8, **caractérisé en ce que** ledit sel de métal de transition est choisi dans le groupe constitué par les métaux suivants : le fer et le cuivre.

10. Procédé de traitement selon l'une quelconque des revendications 1 à 9, **caractérisé en ce que** ladite étape de floculation comprend une étape de maturation dans une zone de maturation (13) placée en amont de ladite zone de décantation (14).

11. Procédé de traitement selon l'une quelconque des revendications 1 à 10, **caractérisé en ce que** la mise en contact de ladite eau avec ledit adjuvant floculant se fait au moins une minute après mise en contact de ladite eau avec chacun desdits sels.

12. Procédé de traitement selon l'une quelconque des revendication 1 à 11, **caractérisé en ce que** le temps de séjour de ladite eau mise en contact avec le peroxyde d'hydrogène dans ladite zone d'oxydation avancée (10) est compris entre 2,5 et 45 minutes.

13. Procédé de traitement selon l'une quelconque des revendications 1 à 12, **caractérisé en ce que** le temps de séjour de ladite eau mise en contact avec le peroxyde d'hydrogène dans ladite zone d'oxydation avancée (10) est compris entre 7 et 20 minutes.

14. Procédé de traitement selon l'une quelconque des revendications 1 à 13, **caractérisé en ce que** le temps de séjour de ladite eau mise en contact avec ledit adjuvant floculant et ledit ballast dans ladite zone de floculation (12) et/ou de maturation (13) est supérieur à 3 minutes.

15. Procédé de traitement selon l'une quelconque des revendications 1 à 14, **caractérisé en ce que** le temps de séjour de ladite eau mise en contact avec ledit adjuvant floculant et ledit ballast dans ladite zone de floculation (12) et/ou de maturation (13) est compris entre 5 et 15 minutes.

16. Procédé de traitement selon l'une quelconque des revendications 1 à 15, **caractérisé en ce que** le rapport du débit de ladite eau par la surface horizontale de ladite zone de décantation (14) est supérieur à 15 m/h.

17. Procédé de traitement selon l'une quelconque des revendications 1 à 16, **caractérisé en ce que** le rapport du débit de ladite eau par la surface horizontale de ladite zone de décantation (14) est compris entre 30 et 120 m/h.

18. Installation de traitement d'eau pour la mise en oeuvre du procédé de traitement d'eau selon l'une quelconque des revendications 1 à 17, **caractérisée en ce qu'**elle comprend :
- une zone d'oxydation avancée (10) pourvue de moyens d'injection de peroxyde d'hydrogène (17), de moyens d'injection dudit sel de métal de transition (18), et d'au moins un agitateur (110) ;
- une canalisation (16) d'amenée de ladite eau dans ladite zone d'oxydation avancée (10) ;
- une zone de floculation (12) pourvue de moyens d'injection dudit adjuvant floculant (20) et d'au moins un agitateur (121);
- des moyens d'injection dudit ballast (21) reliés à ladite zone de floculation (12) ou à ladite zone d'oxydation avancée (10) ;
- une zone de décantation (14) pourvu d'une évacuation (22) de ladite eau traitée en partie haute, et d'une évacuation (23) dudit mélange de boue et de ballast en partie basse
- des moyens de recyclage d'au moins une partie des boues dans ladite zone d'oxydation avancée (10).

19. Installation de traitement d'eau selon la revendication 18, **caractérisée en ce qu'**elle comprend une zone de coagulation (11) en amont de ladite zone de floculation (12) et pourvue d'au moins un agitateur (111) et de moyens d'injection dudit sel coagulant (19).

20. Installation de traitement d'eau selon l'une quelconque des revendications 18 et 19, **caractérisé en ce qu'**elle comprend une zone de maturation (13) placée en amont de ladite zone de décantation (14) et munie d'au moins un agitateur (131).

21. Installation de traitement d'eau selon l'une quelconque des revendications 18 à 20, **caractérisée en ce que** ladite zone de floculation (12) et ladite zone de maturation (13) sont confondues.

22. Installation de traitement d'eau selon l'une quelconque des revendications 18 à 21, **caractérisée en ce qu'**au moins un desdits agitateurs est entouré par un guide flux (40) essentiellement cylindrique et vertical.

## Claims

1. Method of treating water charged with dissolved or suspended colloidal impurities, in a treatment plant, said method including :
- a step of placing said water, in an advance oxidation area (10), in contact with hydrogen peroxide in the present of at least one transition-metal salt;
- a flocculation step consisting in placing said water, in a flocculation area (12), in contact with at least one flocculant and with at least one ballast consisting of at least one insoluble granular material denser than water;
- a step of introducing the mixture of water and floc thus formed into a settling area (14);
- as step of separating the treated water at the upper portion of said settling area (14) with a mixture of sludge and ballast resulting from the settling of said floc;
- a step of extracting the mixture of sludge and ballast at the lower portion (23) of said settling area (14);
- a step of recycling at least a portion of the sludge into said advanced oxidation area (10).

2. Treatment method according to claim 1, **characterised in that** the time period separating the placement of said water in contact with the hydrogen peroxide and the separation of the treated water is less than 1 hour.

3. Treatment method according to any of claims 1 to 2, **characterised in that** it includes a sludge/ballast hydrocyclone separation step.

4. Treatment method according to claim 3, **characterised in that** it includes a step of recycling the underflow (21) of said hydrocyclone separation step into said flocculation area (12).

5. Treatment method according to claim 3, **characterised in that** it includes a step of recycling the underflow (21) of said hydrocyclone separation step into said advanced oxidation step (10).

6. Treatment method according to any of claims 3 to 5, **characterised in that** it includes a step of recycling a portion of the sludge derived from the overflow (26) of said hydrocyclone separation step into said advanced oxidation step (10).

7. Treatment method according to any of claims 1 to 6, **characterised in that** it includes a step of placing said water in contact with at least one coagulating salt in a coagulating area (11).

8. Treatment method according to claim 7, **characterised in that** said coagulating salt is ferric chloride.

9. Treatment method according to any of claims 1 to 8, **characterised in that** said transition-metal salt is chosen from the group consisting of the following metals: iron and copper.

10. Treatment method according to any of claims 1 to 9, **characterised in that** said flocculation step includes a ripening step in a ripening area (13) positioned upstream from said settling area (14).

11. Treatment method according to any of claims 1 to 10, **characterised in that** said water is placed in contact with said flocculant at least one minute after placing said water in contact with each of said salts.

12. Treatment method according to any of claims 1 to 11, **characterised in that** the residence time of said water placed in contact with the hydrogen peroxide in said advanced oxidation area (10) is between 2.5 and 45 minutes.

13. Treatment method according to any of claims 1 to 12, **characterised in that** the residence time of said water placed in contact with the hydrogen peroxide in said advanced oxidation area (10) is between 7 and 20 minutes.

14. Treatment method according to any of claims 1 to 13, **characterised in that** the residence time of said water placed in contact with said flocculant and said ballast in said flocculation and/or ripening area (12) is greater than 3 minutes.

15. Treatment method according to any of claims 1 to 14, **characterised in that** the residence time of said water in contact with said flocculant and said ballast, in said flocculation and/or said ripening area (12) is between 5 and 15 minutes.

16. Treatment method according to any of claims 1 to 15, **characterised in that** the flow rate of said water via the horizontal surface of said settling area (14) is greater than 15 m/h.

17. Treatment method according to any of claims 1 to 16, **characterised in that** the flow rate of said water via the horizontal surface of said settling area (14) is between 30 and 120 m/h.

18. Water treatment plant for implementing the water treatment method according to any of claims 1 to 17, **characterised in that** it includes:
- an advanced oxidation area (10) provided with means of injecting hydrogen peroxide (17), means of injecting said transition-metal salt (18), and at least one stirrer (110);
- a pipeline (16) for feeding said water into said advanced oxidation area (10);
- a flocculation area (12) provided with means of injecting said flocculant (20) and at least one stirrer (121);
- means of injecting said ballast (21), which are connected to said flocculation area (12) or to said advanced oxidation area (10);
- a settling area (14) provided with an outlet (22) for said treated water at the upper portion, and with an outlet (23) for said mixture of sludge and ballast at the lower portion;
- means of recycling at least a portion of the sludge into said advanced oxidation area (10).

19. Water treatment plant according to claim 18, **characterised in that** it includes a coagulation area (11) upstream from said flocculation area (12) and provided with at least one stirrer (111) and means of injecting said coagulating salt (19).

20. Water treatment plant according to any of claims 18 and 19, **characterised in that** it includes a ripening area (13) positioned upstream from said settling area (14) and provided with at least one stirrer (131).

21. Water treatment plant according to any of claims 18 to 20, **characterised in that** said flocculation area (12) and said ripening area (13) are merged.

22. Water treatment plant according to any of claims 18 to 21, **characterised in that** at least one of said stirrers is surrounded by a substantially cylindrical and vertical flow guide (40).

## Patentansprüche

1. Verfahren zur Aufbereitung von mit aufgelösten oder in Suspension vorhandenen kolloiden Verunreinigungen belastetem Wasser, in einer Aufbereitungsanlage, wobei das besagte Verfahren folgendes umfasst:
- einen Schritt, in dem das besagte Wasser in einem Bereich fortgeschrittener Oxidation (10) mit Wasserstoffperoxid in Gegenwart von mindestens einem Salz eines Übergangsmetalls in Kontakt gebracht wird;
- einen Ausflockungsschritt, der darin besteht, dass in einem Ausflockungsbereich (12) das besagte Wasser mit mindestens einem Ausflockungszusatzmittel, und mindestens einem Ballast in Kontakt gebracht wird, der aus mindestens einem unlösbaren körnigen Stoff besteht, der dichter als Wasser ist;
- einen Schritt zum Einführen eines so gebildeten Gemischs aus Wasser und Flocken in einen Dekantationsbereich (14);
- einen Schritt zum Trennen des im oberen Bereich des besagten Dekantationsbereichs (14) behandelten Wassers von einem Gemisch aus Schlamm und Ballast, das aus der Dekantation der besagten Flocken entsteht;
- einen Schritt zum Extrahieren des Gemischs aus Schlamm und Ballast im unteren Teil (23) des besagten Dekantationsbereichs (14);
- einen Schritt zum Recyclen von mindestens einem Teil der Schlämme in den besagten Bereich fortgeschrittener Oxidation (10).

2. Aufbereitungsverfahren nach Anspruch 1, **dadurch gekennzeichnet, dass** die Zeit zwischen dem in Kontakt bringen des besagten Wassers mit dem Wasserstoffperoxid und dem Trennen des aufbereiteten Wassers weniger als 1 Stunde beträgt.

3. Aufbereitungsverfahren nach einem der Ansprüche 1 oder 2, **dadurch gekennzeichnet, dass** es einen Schritt zur Schlamm/Ballast-Trennung durch Hydrozyklonierung umfasst.

4. Aufbereitungsverfahren nach Anspruch 3, **dadurch gekennzeichnet, dass** es einen Schritt zum Recyclen des unteren Ablaufproduktes (21) des besagten Trennungsschrittes durch Hydrozyklonierung in den besagten Ausflockungsbereich (12) umfasst.

5. Aufbereitungsverfahren nach Anspruch 3, **dadurch gekennzeichnet, dass** es einen Schritt zum Recyclen des unteren Ablaufproduktes (21) des besagten Trennungsschritts durch Hydrozyklonierung in den besagten Bereich fortgeschrittener Oxidation (10) umfasst.

6. Aufbereitungsverfahren nach einem der Ansprüche 3 bis 5, **dadurch gekennzeichnet, dass** es einen Schritt zum Recyclen eines Teils der Schlämme, die aus dem oberen Einlaufbereich (26) des besagten Trennungsschritts durch Hydrozyklonierung stammen, in den besagten Bereich fortgeschrittener Oxidation (10) umfasst.

7. Aufbereitungsverfahren nach einem der Ansprüche 1 bis 6, **dadurch gekennzeichnet, dass** es einen Schritt umfasst, bei dem das besagte Wasser in Kontakt mit mindestens einem koagulierenden Salz in einem Koagulationsbereich (11) gebracht wird.

8. Aufbereitungsverfahren nach Anspruch 7, **dadurch gekennzeichnet, dass** es sich bei dem besagten koagulierenden Salz um Eisenchlorid handelt.

9. Aufbereitungsverfahren nach einem der Ansprüche 1 bis 8, **dadurch gekennzeichnet, dass** das besagte Übergangsmetallsalz aus der die folgenden Metalle umfassenden Gruppe gewählt wird: Eisen und Kupfer.

10. Aufbereitungsverfahren nach einem der Ansprüche 1 bis 9, **dadurch gekennzeichnet, dass** der besagte Ausflockungsschritt einen Reifungsschritt in einem Reifungsbereich (13) umfasst, der oberhalb des besagten Dekantationsbereichs (14) liegt.

11. Aufbereitungsverfahren nach einem der Ansprüche 1 bis 10, **dadurch gekennzeichnet, dass** das in Kontakt bringen des besagten Wassers mit dem besagten Ausflockungszusatzmittel mindestens eine Minute nach dem in Kontakt bringen des besagten Wassers mit jedem der besagten Salze erfolgt.

12. Aufbereitungsverfahren nach einem der Ansprüche 1 bis 11, **dadurch gekennzeichnet, dass** die Verweildauer des besagten Wassers, welches im besagten Bereich fortgeschrittener Oxidation (10) in Kontakt mit dem Wasserstoffperoxid gebracht wird, zwischen 2,5 und 45 Minuten beträgt.

13. Aufbereitungsverfahren nach einem der Ansprüche 1 bis 12, **dadurch gekennzeichnet, dass** die Verweildauer des besagten Wassers, welches im besagten Bereich fortgeschrittener Oxidation (10) in Kontakt mit dem Wasserstoffperoxid gebracht wird, zwischen 7 und 20 Minuten beträgt.

14. Aufbereitungsverfahren nach einem der Ansprüche 1 bis 13, **dadurch gekennzeichnet, dass** die Verweildauer des mit dem besagten Ausflockungszusatzmittel und dem besagten Ballast in Kontakt gebrachten besagten Wassers in dem besagten Ausflockungsbereich (12) und/oder Reifungsbereich (13) mehr als 3 Minuten beträgt.

15. Aufbereitungsverfahren nach einem der Ansprüche 1 bis 14, **dadurch gekennzeichnet, dass** die Verweildauer des mit dem besagten Ausflockungszusatzmittel und dem besagten Ballast in Kontakt gebrachten besagten Wassers in dem besagten Ausflockungsbereich (12) und/oder Reifungsbereich (13) zwischen 5 und 15 Minuten beträgt.

16. Aufbereitungsverfahren nach einem der Ansprüche 1 bis 15, **dadurch gekennzeichnet, dass** das Durchlaufratenverhältnis des besagten Wassers durch die horizontale Fläche des besagten Dekantationsbereichs (14) mehr als 15 m/h beträgt.

17. Aufbereitungsverfahren nach einem der Ansprüche 1 bis 16, **dadurch gekennzeichnet, dass** das Durchlaufratenverhältnis des besagten Wassers durch die horizontale Fläche des besagten Dekantationsbereichs (14) 30 bis 120 m/h beträgt.

18. Anlage zum Aufbereiten von Wasser zur Anwendung des Verfahrens zur Aufbereitung von Wasser nach einem der Ansprüche 1 bis 17, **dadurch gekennzeichnet, dass** sie folgendes umfasst:
- einen Bereich fortgeschrittener Oxidation (10), der Mittel zum Einspritzen von Wasserstoffperoxid (17), Mittel zum Einspritzen des besagten Übergangsmetallsalzes (18) und mindestens ein Rührwerk (110) aufweist;
- eine Leitung (16) zum Zuleiten des besagten Wassers in den besagten Bereich fortgeschrittener Oxidation (10);
- einen Ausflockungsbereich (12), der über Mittel zum Einspritzen des besagten Ausflockungszusatzmittels (20) und mindestens ein Rührwerk (121) verfügt:
- Mittel zum Einspritzen des besagten Ballasts (21), die mit dem besagten Ausflockungsbereich (12) oder dem besagten Bereich fortgeschrittener Oxidation (10) verbunden sind;
- einen Dekantationsbereich (14) mit einem Ablauf (22) des besagten aufbereiteten Wassers im oberen Bereich und mit einem Ablauf (23) des besagten Schlamms und Ballastes im unteren Bereich;
- Mittel zum Recyclen von mindestens einem Teil der Schlämme in den besagten Bereich fortgeschrittener Oxidation (10).

19. Anlage zum Aufbereiten von Wasser nach Anspruch 18, **dadurch gekennzeichnet, dass** sie einen Koagulationsbereich (11) vor dem besagten Ausflockungsbereich (12) aufweist und über mindestens ein Rührwerk (111) sowie über Mittel zum Einspritzen des besagten Koagulationssalzes (19) verfügt.

20. Anlage zum Aufbereiten von Wasser nach einem der Ansprüche 18 oder 19, **dadurch gekennzeichnet, dass** sie einen Reifungsbereich (13) umfasst, der vor dem besagten Dekantationsbereich (14) angebracht ist und mindestens ein Rührwerk (131) aufweist.

21. Anlage zum Aufbereiten von Wasser nach einem der Ansprüche 18 bis 20, **dadurch gekennzeichnet, dass** der besagte Ausflockungsbereich (12) und der besagte Reifungsbereich (13) zusammengelegt sind.

22. Anlage zum Aufbereiten von Wasser nach einem der Ansprüche 18 bis 21, **dadurch gekennzeichnet, dass** mindestens eines der besagten Rührwerke von einer im Wesentlichen zylindrischen und vertikalen Strömungsführung (40) umgeben ist.
